(19) Europäisches Patentamt

European Patent Office

Office européen des brevets

(11) Veröffentlichungsnummer: **0 485 849 A2**

# (12) EUROPÄISCHE PATENTANMELDUNG

(21) Anmeldenummer: **91118784.7**

(22) Anmeldetag: **04.11.91**

(51) Int. Cl.⁵: **G01M 11/00**

(30) Priorität: **13.11.90 DE 4036106**

(43) Veröffentlichungstag der Anmeldung:
**20.05.92 Patentblatt 92/21**

(84) Benannte Vertragsstaaten:
**AT BE CH DE FR GB IT LI NL SE**

�
 Anmelder: **SIEMENS AKTIENGESELLSCHAFT**
**Wittelsbacherplatz 2**
**W-8000 München 2(DE)**

(72) Erfinder: **Lieber, Winfried, Dr. Dipl.-Ing.**
**Alpenstrasse 21**
**W-8033 Krailling(DE)**

(54) **Messvorrichtung für ein optisches Medium unter Verwendung zweier Sender und zweier Empfänger.**

㊗ Je ein optischer Sender und ein optischer Empfänger (SE1, EM1; SE2, EM2) sind jeweils zu einer selbständigen Baueinheit (BE1, BE2) zusammengefaßt. Diese Baueinheiten (BE1, BE2) werden über flexible Leitungen (FL1, FL2) mit einem Meß- und Auswertegerät (MG) verbunden, in dem die Auswertung und/oder der Anzeige der von den Baueinheiten gewonnenen Meßsignale erfolgt.

FIG1

EP 0 485 849 A2

Die Erfindung betrifft eine Meßvorrichtung für ein optisches Medium unter Verwendung Zweier optischer Sender und zweier optischer Empfänger, die zu beiden Seiten an das optische Medium ankoppelbar sind.

Eine Meßvorrichtung dieser Art ist in der DE-OS 38 28 604 sowie in der US-PS 4 652 123 beschrieben. Das Meßprinzip besteht dabei kurz gesagt darin, daß auf einer Seite des optischen Mediums (z.B. in Form eines Lichtwellenleiterspleißes, eines Kopplers, eines sonstigen passiven optischen Bauelementes) ein optischer Sender angeschlossen wird, der sein Meßsignal in einen zum optischen Medium führenden Lichtwellenleiter einkoppelt. Von diesem ersten Meßsender werden zwei Meßsignale mittels zweier Meßempfänger gewonnen und zwar einmal vor dem optischen Medium und einmal nach dem optischen Medium. In gleicher Weise wird dann auf der anderen Seite des optischen Mediums ein optischer Sender angekoppelt und es wird wiederum eine Messung des Empfangssignals mittels zweier Empfänger vor dem optischen Medium und nach dem optischen Medium durchgeführt. Insgesamt werden somit bei dieser Betriebsweise zwei optische Sender und zwei optische Empfänger benötigt. Aus den so gewonnenen Meßsignalen läßt sich dann in der in der DE-OS 38 28 604 im einzelnen beschriebenen Weise die Dämpfung des optischen Mediums genau bestimmen.

In vielen Fällen ist es notwendig, die Messung am Einsatzort, z.B. bei der Spleißung eines Lichtwellenleiterkabels durchzuführen. Dies setzt voraus, daß die Meßvorrichtung als solche transportabel ausgebildet ist und es besteht die Forderung, daß von der Bedienungsperson die Meßarbeiten möglichst einfach und schnell durchgeführt werden können, wobei möglichst genau re-produzierbare Meßergebnisse erhalten werden sollen.

Diese Aufgabe wird bei einer Meßvorrichtung der eingangs genannten Art erfindungsgemäß dadurch gelöst, daß je ein optischer Sender und ein optischer Empfänger jeweils zu einer selbständigen Baueinheit zusammengefaßt sind, daß diese Baueinheiten über flexible Leitungen mit einem Meß- und Auswertegerät verbunden sind, in dem die Auswertung und/oder Anzeige der von den Baueinheiten gewonnenen Meßsignale erfolgt.

Da jeweils ein Sender und ein Empfänger zu einer selbständigen Baueinheit zusammengefaßt sind, ist es für die Bedienungsperson nicht notwendig mit insgesamt vier Baueinheiten (nämlich zwei Sendern und zwei Empfängern) zu arbeiten, sondern mechanisch stehen nur insgesamt zwei Baueinheiten zur Verfügung, die jeweils entsprechend doppelt, nämlich mit einem Sender und einem Empfänger bestückt sind. Für die Bedienungsperson vereinfacht sich somit der Anschluß der Meßvorrichtung beiderseits des zu messenden optischen Mediums in erheblicher Weise, weil lediglich die beiden Baueinheiten anzukoppeln sind und damit bereits sichergestellt ist, daß alle notwendigen Meßarbeiten in einfacher und zuverlässiger Weise durchgeführt werden können.

Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Fig. 1    in perspektivischer Darstellung eine Meßvorrichtung gemäß der Erfindung,

Fig. 2    Einzelheiten des Aufbaues einer selbständigen Baueinheit und

Fig. 3    die Baueinheit nach Fig. 2 im teilweise geschnittenen Zustand.

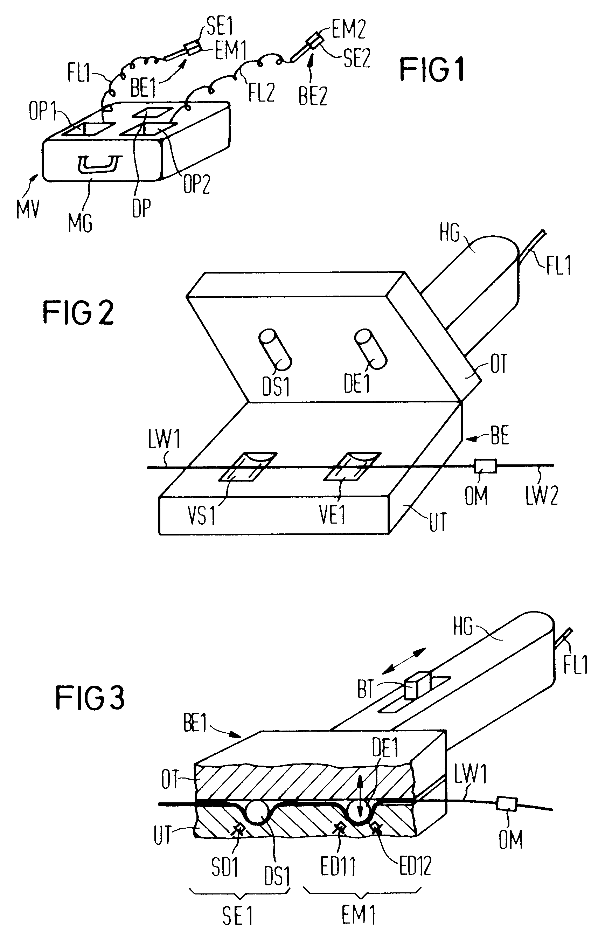

In Fig. 1 ist eine als Koffer ausgebildete Meßvorrichtung MV dargestellt, die an ihrer Oberseite eine Anzeigeeinrichtung DP für die gemessenen Anzeigewerte aufweist. Im Inneren sind die üblichen Meß- und Auswerteschaltungen untergebracht, wobei das Meßverfahren nach den in der DE-OS 38 28 604 beschriebenen Meßverfahren durchgeführt wird. Hierfür sind zwei optische Sender und zwei optische Empfänger erforderlich. Jeweils ein optischer Empfänger und ein optischer Sender sind zu mechanisch selbständigen Baueinheiten BE1 und BE2 zusammengefaßt, wobei BE1 den Sendeteil SE1 und den Empfangsteil EM1 und die Baueinheit BE2, den Sendeteil SE2 und den Empfangsteil EM2 umfaßt. Die Baueinheiten BE1 und BE2 sind über elektrische Leitungen mit dem im Inneren des Meßkoffers MG untergebrachten Auswerteschaltungen verbunden. In der Oberseite des Meßkoffers MG sind zwei Öffnungen OP1 und OP2 vorgesehen, in welche in der Transportstellung die Baueinheiten BE1 und BE2 eingesteckt bzw. eingelegt werden können. Hierzu sind diese Öffnungen OP1 und OP2 so zu dimensionieren, daß sowohl die Anschlußleitungen FL1 und FL2 als auch die Baueinheiten BE1, BE2 in die entsprechenden Vertiefungen hineinpassen. Das Meßgerät MG kann zusätzlich einen (hier nicht näher dargestellten) Deckel aufweisen, welcher zum Schutz der auf der Oberfläche angebrachten Einrichtungen dient.

In Fig. 2 ist in vergrößerter Darstellung der Aufbau der Baueinheit BE1 näher dargestellt. Es ist im übrigen darauf hinzuweisen, daß die Baueinheit BE2 den gleichen Aufbau zeigt und somit hier nicht näher dargestellt ist. In dem etwa blockförmig ausgebildeten Unterteil UT der Baueinheit BE1 sind zwei Vertiefungen VS1 und VE1 untergebracht, über die der Lichtwellenleiter LW1 (gegebenenfalls in einer Führungsnut) gelegt wird. Dieser Lichtwellenleiter LW1 führt zu einem zu messenden optischen Medium OM, z.B. in Form einer Spleißstelle, eines Kopplers, einer Lichtwellen-Leitung größerer Länge oder dergleichen.

Am anderen Ende des optischen Mediums OM ist ein weiterer Lichtwellenleiter LW2 vorgesehen, an den in analoger Weise für den Meßvorgang die Baueinheit BE2 nach Fig. 1 angekoppelt wird.

Ein Oberteil OT, welches drehbar mit dem Unterteil UT verbunden ist, weist zwei Dorne DS1, DE1 auf, die so angeordnet sind, daß sie in die Vertiefungen VS1 bzw. VE1 hineinpassen und zwar so, daß sie den Lichtwellenleiter LWL1 gegen die Bodenfläche der Vertiefungen VS1 und VE1 drükken. Im geschlossenen Zustand entsteht somit ein Verlauf, wie er in Fig. 3 dargestellt ist, d.h. der Lichtwellenleiter LW1 verläuft bogenförmig, wodurch es möglich ist, Licht in den Lichtwellenleiter ein- bzw. auszukoppeln. In Fig. 3 sind hierzu eine Sendediode SD1 im Bereich des Dornes DS1 vorgesehen, durch welche Licht in den Lichtwellenleiter LW1 nach rechts hin eingekoppelt wird. Im Bereich des Dornes DE1 sind zwei Empfangsdioden ED11 und ED12 vorgesehen, wobei die Empfangsdiode ED12 Licht von der Senderdiode SD1 auskoppelt, während die Empfangsdiode ED11 Licht auskoppelt, welches von rechts kommt, also von dem Sender der (hier nicht näher dargestellten) Baueinheit BE2 rechts vom optischen Medium OM. Der Anschluß ist in allen Fällen so vorzunehmen, daß der Empfänger EM1 bzw. EM2 auf der dem optischen Medium OM Zugekehrten Seite liegt, während der Sender SE1 bzw. SE2 auf der dem optischen Medium OM abgekehrten Seite der Baueinheit BE1 zu liegen kommt.

Somit sind bei der Baueinheit BE2 der Empfänger EM2 und der Sender SE2 spiegelbildlich bezüglich des optischen Mediums OM anzuordnen, d.h. es folgt (von vorne gesehen wie bei Fig. 2 und 3) links zuerst der Empfänger EM2 und dann der Sender SE2.

Es ist zweckmäßig, wenn die Baueinheiten BE1 und BE2 mit einem Handgriff HG versehen sind, wodurch sie für die Bedienungsperson leichter handhabbar und an die jeweiligen Lichtwellenleiter LW1 und LW2 anschließbar sind. In diesem Zusammenhang ist es auch besonders vorteilhaft, jede dieser Baueinheiten BE1 und BE2 als Handzange auszubilden, d.h. als ein Gerät, bei dem mittels einer Betätigungseinrichtung BT im Bereich des Handgriffes HG ein Öffnen (Fig. 2) und ein Schließen (Fig. 3) des Oberteiles OT gegenüber dem Unterteil UT vorgenommen werden kann. Für das Einlegen des Lichtwellenleiters LW1 wird also lediglich entsprechend Fig. 2 das Oberteil OT mittels der Betätigungseinrichtung BT hochgeklappt, dann der Lichtwellenleiter eingelegt und schließlich mittels der Betätigungseinrichtung BT das Oberteil OT wieder geschlossen, so daß eine Position entsprechend Fig. 3 erreicht wird.

## Patentansprüche

1. Meßvorrichtung (MV) für ein optisches Medium (OM) unter Verwendung Zweier optischer Sender (SE1, SE2) und zweier optischer Empfänger (EM1, EM2), die zu beiden Seiten an das optische Medium (OM) ankoppelbar sind, **dadurch gekennzeichnet,** daß je ein optischer Sender und ein optischer Empfänger (SE1, EM1; SE2, EM2) jeweils zu einer selbständigen Baueinheit (BE1, BE2) zusammengefaßt sind, daß diese Baueinheiten (BE1, BE2) über flexible Leitungen (FL1, FL2) mit einem Meß- und Auswertegerät (MG) verbunden sind, in dem die Auswertung und/oder Anzeige der von den Baueinheiten (BE1, BE2) gewonnenen Meßsignale erfolgt.

2. Meßvorrichtung für ein optisches Medium nach Anspruch 1, **dadurch gekennzeichnet,** daß jede Baueinheit (z.B. BE1) für den zugehörigen Sender (SE1) und den zugehörigen Empfänger (EM1) eine Koppeleinrichtung aufweist, die öffenbar und schließbar ausgebildet ist.

3. Meßvorrichtung für ein optisches Medium nach Anspruch 2, **dadurch gekennzeichnet,** daß die Koppeleinrichtung als Biegekoppler (DS1, VS1; DE1, VE1) ausgebildet ist.

4. Meßvorrichtung für ein optisches Medium nach einem der Ansprüche 2 oder 3, **dadurch gekennzeichnet,** daß die Koppeleinrichtung für den Sender (DS1, VS1) und die Koppeleinrichtung für den Empfänger (DE1, VE1) gemeinsam betätigbar sind.

5. Meßvorrichtung für ein optisches Medium nach einem der vorhergehenden Ansprüche, **dadurch gekennzeichnet,** daß jede Baueinheit (BE1, BE2) mit einem Handgriff (HG) versehen ist.

6. Meßvorrichtung für ein optisches Medium nach Anspruch 5, **dadurch gekennzeichnet,** daß in dem Handgriff (HG) Betätigungseinrichtungen (BT) für das Schließen und Öffnen der Koppeleinrichtungen (DS1, VS1; DE1, VE1) versehen ist.

7. Meßvorrichtung für ein optisches Medium nach den Ansprüchen 5 und 6,
**dadurch gekennzeichnet,**
daß am Ende des Handgriffes (HG) die flexible Leitung (FL1) austritt.

FIG 1

FIG 2

FIG 3